# EUROPEAN PATENT APPLICATION

(11) **EP 1 920 656 A2**
(43) Date of publication of application: **14.05.2008**
(21) Application number: 07120050.5
(22) Date of filing: 06.11.2007
(51) Int. Cl.: A21C 1/02, A21C 1/14, B01F 7/16, B01F 15/04, F16P 1/02

(54) **Industrial kneading and/or mixing machine for bakery products and/or confectionery, equipped with dosing means**

(30) Priority: 07.11.2006 IT VR20060170
(71) Applicant: Franchini, Francesco, 38079 Bolbeno (TN) (IT)
(72) Inventor: Franchini, Francesco, 38079 Bolbeno (TN) (IT)
(74) Representative: Petraz, Gilberto Luigi

(57) **Abstract**

An industrial kneading and/or mixing machine (10) for bakery products comprising a mixing bowl (16) and a guard (14) covering the bowl. The machine is equipped with an integrated dosing unit (11) which doses the ingredients and pours them directly into the bowl (16) of the kneading and/or mixing machine (10).

## Description

### TECHNICAL FIELD

The present invention relates to a dosing device suitable for application to an industrial kneading and/or mixing machine for bakery and/or confectionery products.

In particular the present invention comprises a dosing device to be incorporated in an automated system for the production of food doughs, substantially comprising industrial kneading and/or mixing machines.

The device according to the present invention comprises a dosing system for use together with industrial kneading and/or mixing machines which substantially overcomes the problems encountered in the preparation of dough for the bakery and confectionery industries where the individual ingredients are weighed separately and independently before being fed into the kneading and/or mixing machine or machines; current methods for doing this are very difficult to manage, involve high plant construction costs and make the various stages of the dough production process difficult to manage.

The present invention relates to the field of machinery and equipment for the production of bakery and similar products and in particular to the sector of industrial kneading and/or mixing machines.

### BACKGROUND OF THE INVENTION

According to the conventional art for the preparation of dough for the bakery and confectionery sector, irrespective of how recipes are managed, the individual ingredients are weighed separately and independently and then placed in the kneading and/or mixing machine. This is an inefficient way to control material stock flows, manage production batches and maintain product traceability; in some cases the current systems are not able to manage these factors at all.

This is due to the fact that according to the method currently in use, the conventional production of dough for bakery products commonly involves the use of a weighing unit consisting of an electronic balance, sometimes incorporating management software, and an electronic library of recipes, used to set the weights of the ingredients of various dough types and then perform the weighed dosing of the ingredients as they are added to the balance one by one.

Once the ingredients have been dosed they are taken and poured into the kneading and/or mixing machine which prepares the dough. The mixed dough is then taken from the mixer and passed to the production steps downstream.

In some cases the overall size of the various units employed, even if it has been reduced to the minimum, may be a factor discouraging adoption of this system.

With the current system the weighing of the ingredients and their pouring into the kneading and/or mixing machine are two separate operations taking place at different times.

Clearly such a management system is complicated and costly both from the point of view of the engineering of the individual items of equipment and from the point of view of the management and handling of products. These factors cause a considerable increase in costs which also affect the finished product.

### DESCRIPTION OF THE INVENTION

The object of the present invention is that of providing a dosing device suitable for application to industrial kneading and/or mixing machines for bakery products which eliminates or at least reduces the shortcomings described above.

The present invention also provides a dosing device for industrial kneading and/or mixing machines for bakery products which is very easy to construct and which also makes the production of finished products very inexpensive.

This is achieved by means of a dosing device, suitable for application to industrial kneading and/or mixing machines for bakery products, whose characteristics are described in the main claim.

The dependent claims for the present invention describe preferred embodiments of the invention.

The main advantages of this solution, in addition to those which derive from the simplicity of its construction, principally concern the fact that the equipment according to the present invention makes the preparation of dough very simple and efficient because the dosing unit is integrated into the kneading and/or mixing machine itself.

The device according to the present invention substantially comprises an industrial kneading and/or mixing machine or machines fitted with an integrated dosing system able to manage the dosing of ingredients and their pouring directly into the kneading and/or mixing machine.

The weighing and dosing system according to the present invention substantially comprises an electronic balance fitted to the upper part of the kneading and/or mixing machine in a convenient position and where the balance is connected to a CPU which manages dosing also on the basis of recipes included in the management software; the system is constructed and located so that the product weighed and dosed according to the preset quantities can be poured directly into the kneading and/or mixing machine where it will be processed according to current practices.

### BRIEF DESCRIPTION OF THE DRAWINGS

Further features and advantages of the invention will become apparent from the description of an example embodiment which follows with reference to the annexed drawings, given purely by way of a non-limiting example, in which:
- Figure 1 shows a top view of the kneading and/or mixing machine according to the present invention where the dosing device is fitted to the tipping guard.
- Figure 2 shows a side view of the same.
- Figure 3 shows a side view of the dosing unit.
- Figure 4 shows a front view of the dosing unit.
- Figure 5 shows a front view of the kneading and/or mixing machine.
- Figures 6 to 10 show another embodiment and show, respectively: a top view and a side view of the kneading and/or mixing machine; a side view and front view of the dosing unit; a front view of the kneading and/or mixing machine fitted with the dosing unit according to this embodiment.
- Figures 11 to 15 show a third embodiment and show respectively: a top view and a side view of the kneading and/or mixing machine; a side view and front view of the dosing unit; a front view of the kneading and/or mixing machine fitted with the dosing unit according to this embodiment.

### DESCRIPTION OF AN EXAMPLE EMBODIMENT

The following description refers to the annexed figures showing an industrial kneading and/or mixing machine for bakery products, indicated generally with the numeral 10, incorporating a weighing and dosing device 11 according to the present invention.

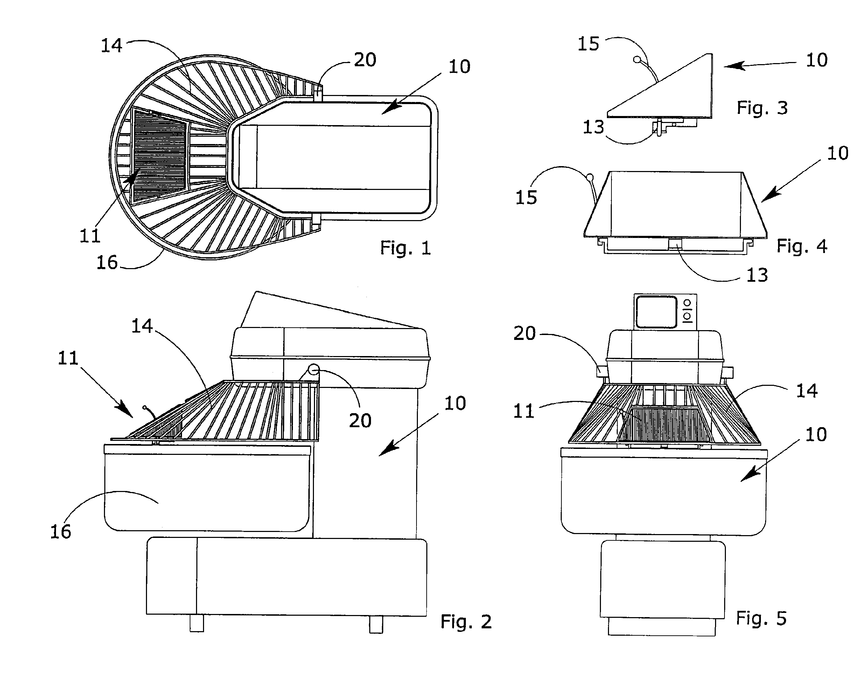

Figures 1 to 5 show a dosing device 11 substantially comprising a weighing and dosing surface 12 mounted above a load cell 13 which in turn is connected to a CPU upstream.

In the example embodiment shown here, the dosing surface 12 is incorporated in the guard 14 of the kneading and/or mixing machine so that a pivoting device mounted at the load cell 13 enables the surface to be rotated by means of a lever 15 so that the product can be poured into the bowl 16 of the kneading and/or mixing machine.

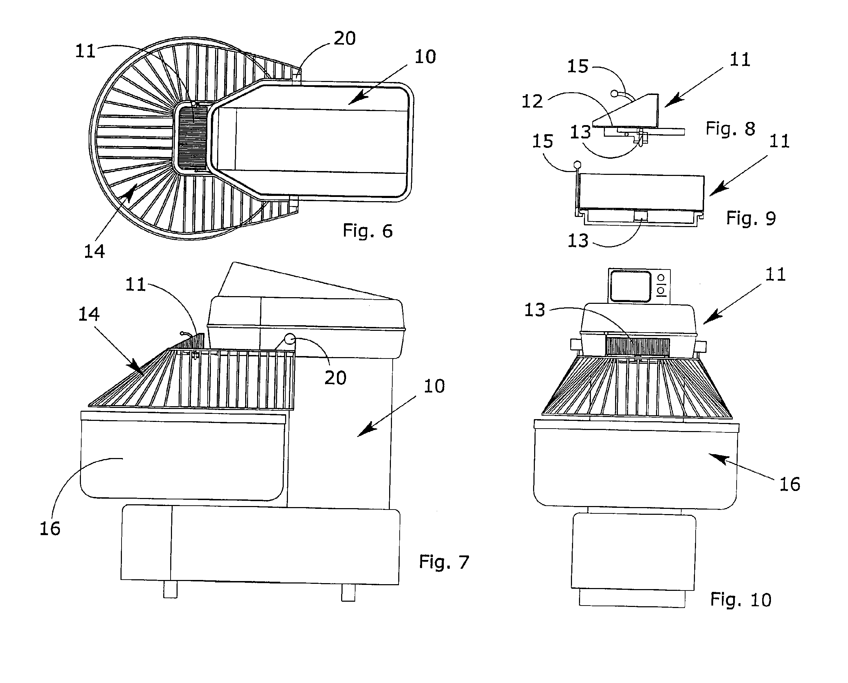

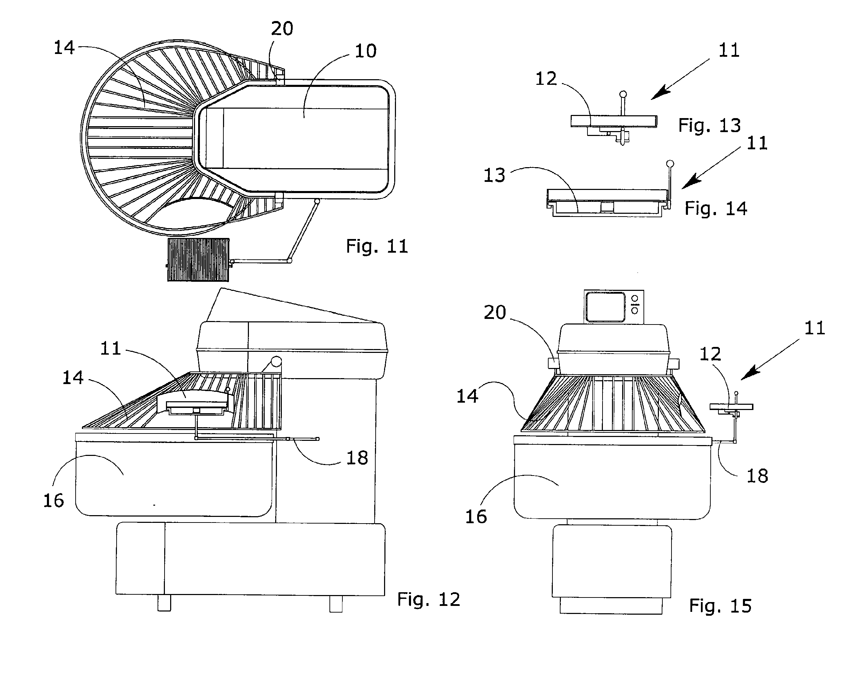

The basic solution described above can be employed in numerous embodiments some of which are shown in the Figures 6 to 10 and Figures 11 to 15. These sets of figures show, respectively, the weighing and dosing device 11 mounted on the upper part 17 of the guard 14 and on a pivoting arm 18. In this case the dough ingredients are poured through an opening 19 provided for this purpose in the guard 14 of the kneading and/or mixing machine.

In other embodiments the dosing device comprises a torsional load cell mounted on the rotation shaft 20 of the guard 14.

This system avoids all the shortcomings of known equipment as described above and is also an integral part of the kneading and/or mixing machine used in the preparation of bakery and confectionery products. The advantages of this solution are considerable and are as follows:
1. The balance for weighing the ingredients is installed directly on the machine. Thus all the ingredients weighed can be unloaded directly into the kneading/mixing bowl. An industrial PC automatically controls material flows and other aspects of the cycle.
2. This solution entirely eliminates the costs of conventional systems employing separate weighing cycles. This is because there is no longer any need for a electrical panel for the industrial PC. Mounting the balance on-board the machine solves the space problems of conventional machines. All the structures commonly used for dosing ingredients are no longer required.
3. This solution also reduces the purchasing costs of a kneading and/or mixing machine because the conventional control panel is replaced by an industrial PC which controls the machine logic of the kneading and/or mixing machine.
4. In order to weigh large amounts of ingredients the system can include an optional external weighing platform, with a decreasing weighing function, integrated into the system controlled by the PC.
5. In the programming of work, especially in environments such as large distribution networks, it is possible to automate the dough making process by fitting an automatic water dosing system to the machine and connecting other items of dosing equipment, such as silos, to the system bus. The adoption of a dosing system according to this invention would also enable interaction with the programming systems of external processes (for example, work scheduling, quality systems and maintenance systems) thus considerably reducing production times and costs.

As a final consideration it can be said that a design according to the present invention, given its relatively low cost, would be a valid replacement for conventional separate weighing systems in those companies requiring instruments to facilitate and document working processes but where budgets do not permit the employment of the more expensive conventional systems.

The invention as described above refers to a preferred embodiment. Naturally, while the principle of the invention remains the same, the details of construction and the embodiments may widely vary with respect to what has been described and illustrated purely by way of the example, without departing from the scope of the present invention.

## Claims

1. An industrial kneading machine and/or mixing machine (10) for bakery products comprising a mixing bowl (16) and a guard (14) covering the bowl, wherein the machine is fitted with an integrated dosing unit (11) which doses the ingredients and pours them directly into the bowl (16) of the kneading and/or mixing machine.

2. An industrial kneading machine and/or mixing machine (10) for bakery products according to the foregoing claim wherein the integrated dosing system (11) substantially comprises an electronic balance mounted on the upper part of the kneading and/or mixing machine in a suitable position and wherein the balance is connected to a CPU for managing dosing on the basis of recipes included in the management software; the system is constructed and located in such a way that the product weighed and dosed according to the preset quantities can be poured directly into the kneading and/or mixing machine where it will be processed.

3. An industrial kneading machine and/or mixing machine (10) for bakery products according to one of the foregoing claims wherein the dosing device (11) substantially comprises a weighing and dosing surface (12) mounted above a load cell (13) which in turn is connected to a CPU upstream.

4. An industrial kneading machine and/or mixing machine (10) for bakery products according to one of the foregoing claims wherein the dosing surface (12) is incorporated in the guard (14) of the kneading and/or mixing machine so that a pivoting device mounted at the load cell in (13) enables the surface to be rotated by means of a lever (15) so that the product can be poured into the bowl (16) of the kneading and/or mixing machine.

5. An industrial kneading machine and/or mixing machine (10) for bakery products according to one of the foregoing claims wherein the dosing surface (12) is mounted on the upper part (17) of the guard (14).

6. An industrial kneading machine and/or mixing machine (10) for bakery products according to one of the foregoing claims wherein the dosing surface (12) is mounted on a pivoting arm (18) and wherein the dough ingredients are poured through an opening (19) provided for this purpose in the guard (14) of the kneading and/or mixing machine.

7. An industrial kneading machine and/or mixing machine (10) for bakery products according to one of the foregoing claims wherein the dosing device comprises a torsional load cell mounted on the rotation shaft (20) of the guard (14).
